# FASCICULE DE BREVET EUROPEEN

(11) **EP 2 838 705 B1**
(45) Date de publication et mention de la délivrance du brevet: **13.04.2016**
(21) Numéro de dépôt: 13725392.8
(22) Date de dépôt: 18.04.2013
(51) Int. Cl.: B29C 63/02, B29C 65/02, B29C 70/22, B32B 5/26, B32B 27/04, B32B 27/12, B32B 27/38, B32B 27/42, C09D 7/12

(54) **PROCÉDÉ DE FABRICATION D'UNE PIÈCE COMPOSITE THERMODURCISSABLE REVÊTUE D'UNE COUCHE THERMOPLASTIQUE**
VERFAHREN ZUR HERSTELLUNG EINES DUROPLASTISCHEN KOMPOSITFORMTEILES ÜBERZOGEN MIT EINER THERMOPLASTISCHEN SCHICHT
PROCESS OF MANUFACTURE OF A THERMOSETTING COMPOSITE PART COVERED WITH A THERMOPLASTIC LAYER

(30) Priorité: 20.04.2012 FR 1253641
(43) Date de publication de la demande: 25.02.2015
(73) Titulaire: Airbus Group SAS, 75016 Paris (FR); AIRBUS OPERATIONS (S.A.S), 75016 Paris (FR)
(72) Inventeur: CAVALIERE, Frédérick, F-78180 Montigny Le Bretonneux (FR); PETIOT, Emilie, F-44400 Reze (FR); PIANA, Mathieu, F-Nantes 44000 (FR); COLLART, Cyrille, F-44000 Nantes (FR)
(74) Mandataire: Ipside
(86) Numéro de dépôt international: PCT/FR2013/050859
(87) Numéro de publication internationale: WO 2013/156740

(56) Documents cités:
- EP-A1- 2 052 831
- WO-A1-2007/109855
- DE-A1- 2 150 481
- DE-A1- 10 255 039

## Description

L'invention se rapporte à un procédé de fabrication de pièces en matériau composite.

L'utilisation des matériaux composites est largement répandue dans de nombreux domaines techniques, tels que la construction automobile ou aéronautique. Ce type de matériau est notamment recherché pour le gain de masse qu'il procure, à propriétés mécaniques équivalentes, par rapport à des matériaux conventionnels tels que les métaux.

Les matériaux composites sont particulièrement utilisés pour la fabrication de pièces de structure d'aéronefs. Ces matériaux comportent des fibres, minérales ou organiques, qui sont maintenues par une matrice en résine organique.

La résine de la matrice peut avoir des propriétés thermoplastiques, ou encore thermodurcissables.

Un matériau thermoplastique se ramollit ou fond lorsqu'il est chauffé au-dessus d'une certaine température, et redevient dur en dessous de cette température. Ce phénomène est réversible et n'altère généralement pas les propriétés mécaniques du matériau.

Au contraire, la transformation d'un matériau thermodurcissable fait intervenir une polymérisation irréversible et conduit à un produit fini solide, généralement rigide.

La présente invention se rapporte au cas des matériaux composites avec une matrice thermodurcissable. L'invention concerne particulièrement les pièces de grandes dimensions et/ou de forme complexe, notamment les formes présentant des courbures selon deux directions. De telles pièces sont courantes dans le domaine de l'aéronautique (pointe avant d'avion, fuselage, voilure, radôme...).

Il est souvent nécessaire d'intégrer des fonctions aux pièces composites, comme une métallisation en surface pour la protection contre la foudre, ou le soudage d'installations systèmes.

Une solution connue est de revêtir des pièces en composite thermodurcissable d'un revêtement en résine thermoplastique. Le document WO2007/109855 décrit la fabrication de telles pièces, la couche thermoplastique permettant l'assemblage par thermosoudage de plusieurs pièces entre elles. Des éléments d'installation systèmes peuvent également être soudés aux pièces au niveau du revêtement thermoplastique.

Par ailleurs, la demande de brevet français n°11 59078, au nom de l'une des Demanderesses, décrit la métallisation en surface d'une pièce en composite thermodurcissable revêtue d'une couche thermoplastique.

Comme il est décrit dans la demande de brevet français n°11 59999, au nom de l'une des Demanderesses, la couche thermoplastique peut également avoir une fonction de protection de la matrice thermodurcissable, contre l'oxydation à haute température et/ou les agressions chimiques et/ou les ultraviolets.

Plusieurs procédés de fabrication de telles pièces composites thermodurcissables revêtues d'une couche thermoplastique sont connus. L'un de ces procédés consiste à empiler des plis structuraux imprégnés de résine thermodurcissable, ainsi qu'un film de résine thermoplastique, avant de polymériser à chaud la résine thermodurcissable. Le point de fusion de la résine thermoplastique est choisi de sorte que la couche thermoplastique ramollisse ou fonde à la température de polymérisation. La couche thermoplastique adhère alors aux plis structuraux.

Cependant, un tel procédé est peu adapté aux pièces à double courbure, c'est-à-dire présentant des courbures selon deux directions. En effet, les films thermoplastiques continus sont aptes à se courber selon une seule direction ; ils sont donc difficiles à draper sur des pièces à double courbure.

Une solution à ce problème, décrite dans la demande de brevet français n°11 59078, consiste à pulvériser sur les plis structuraux de fines particules de résine thermoplastique, avant de procéder à la polymérisation à chaud. La forme du revêtement thermoplastique s'adapte ainsi parfaitement à la forme de la pièce. Un tel procédé est néanmoins plus cher et plus contraignant que le drapage.

La présente invention permet de faciliter la fabrication de pièces composites thermodurcissables revêtues d'une couche thermoplastique, présentant une forme complexe de type double courbure.

En effet, la présente invention se rapporte à un procédé de fabrication d'une pièce en matériau composite, ledit procédé comprenant les étapes suivantes :
- une étape de dépôt d'un ou de plusieurs plis structuraux imprégnés d'une résine thermodurcissable pour former une couche structurale,
- une étape de dépôt d'une couche de surface en empilement avec les plis structuraux, ladite couche de surface étant formée d'un assemblage d'une ou plusieurs fibres de résine thermoplastique, ledit assemblage étant déformable selon au moins deux directions, ladite résine thermoplastique ayant une température de fusion proche d'une température de polymérisation de ladite résine thermodurcissable, le dépôt de la couche de surface pouvant intervenir avant et/ou après le dépôt des plis structuraux,
- puis, une étape de polymérisation de la couche structurale à la température de polymérisation, la couche de surface prenant alors la forme d'un film continu revêtant la couche structurale.

Le fait d'utiliser une couche thermoplastique déformable en double courbure facilite le drapage sur des pièces de forme complexe. Par ailleurs, de tels matériaux, de type tricot, mat ou tissu, sont facilement disponibles dans de grandes dimensions.

De plus, la réalisation d'un film thermoplastique nécessite des opérations de ramollissement et calandrage avec contrôle des épaisseurs. La réalisation de tricots, mats ou tissus en fibres thermoplastiques est moins onéreuse.

Selon une forme préférentielle de l'invention, l'assemblage d'une ou plusieurs fibres de résine thermoplastique est un tricot, c'est-à-dire une structure réalisée par entrelacement de boucles formées par un ou plusieurs fils. Une telle structure est particulièrement déformable et apte au drapage sur des formes complexes.

Selon une autre forme préférentielle de l'invention, l'assemblage d'une ou plusieurs fibres de résine thermoplastique est un mat, ou feutre, c'est-à-dire une feuille non tissée formée de fibres enchevêtrées, agrégées entre elles. Une telle structure est également déformable selon au moins deux directions.

Selon une autre forme préférentielle de l'invention, l'assemblage d'une ou plusieurs fibres de résine thermoplastique est un tissu. Plus préférentiellement, il s'agit d'un tissu de type sergé ou de type satin. Ces tissus présentent une bonne déformabilité en double courbure.

Selon un aspect particulier de l'invention, le procédé comprend une étape de mise sous vide de l'empilement de plis préalablement à l'étape de polymérisation de la couche structurale, la couche de surface formée d'un assemblage de fibres de résine thermoplastique assurant une fonction de drainage de l'air lors de ladite étape de mise sous vide.

En effet, il est connu de prévoir une première étape de mise sous vide des plis structuraux avant la polymérisation de la résine thermodurcissable. Cette étape a pour but d'évacuer l'air présent dans et entre les plis, pour éviter de former des porosités dans la pièce composite.

La pièce est ensuite chauffée, par exemple en autoclave, jusqu'à une température de polymérisation de la résine thermodurcissable.

Durant l'étape de mise sous vide, il est nécessaire de drainer l'air présent dans les plis, afin d'assurer une homogénéité de pression sur l'ensemble de la pièce. Cette fonction de drainage est généralement assurée par un mat ou par un tissu drainant, recouvrant l'empilement de plis, qui sera enlevé après polymérisation.

La couche drainante peut également assurer l'évacuation de résidus de solvants contenus dans les plis, au début de la montée en température.

Un aspect particulier de l'invention permet donc de simplifier le dispositif nécessaire à la polymérisation des pièces composites thermodurcissables. En effet, l'assemblage de fibres thermoplastiques est apte à assurer une fonction de drainage de l'air lors de la mise sous vide, préalable à la polymérisation à chaud de la pièce. Le dispositif de polymérisation est ainsi simplifié, car l'ajout d'une couche drainante n'est plus nécessaire.

Selon un mode de réalisation de l'invention, une résine thermodurcissable de la couche structurale est choisie parmi une résine polyépoxyde, une résine bismaléimide ou une résine phénolique. Ces résines sont utilisées de manière connue pour la fabrication de pièces de structure d'aéronefs en composite.

La résine thermoplastique de la couche de surface est un matériau amorphe ou semi-cristallin, préférentiellement choisi avec une température de ramollissement ou fusion comprise dans un intervalle de +/- 30 °C par rapport à la température de polymérisation de la résine thermodurcissable.

Selon un mode de réalisation de l'invention, la résine thermoplastique de la couche de surface est choisie avec une température de fusion relativement faible, notamment comprise entre 100 °C et 250 °C. Une résine préférée est par exemple le PVDF (polyfluorure de vinylidène). On peut également utiliser les PES (polyéthersulfones), les polyamides et les polyétherimides.

L'épaisseur de la couche de surface après formation du film est fonction du grammage de l'assemblage de fibres utilisé. Les épaisseurs sont par exemple comprises entre 1 et 500 µm, préférentiellement entre 10 et 150 µm.

L'invention sera mieux comprise à la lecture de la description qui suit et à l'examen des figures qui l'accompagnent. Celles-ci sont données à titre indicatif et nullement limitatif de l'invention. Les figures montrent :
- Figure 1 : une vue schématique en coupe d'un dispositif de fabrication d'une pièce en matériau composite, selon l'état de la technique ;
- Figure 2 : une vue schématique en coupe d'un dispositif de fabrication d'une pièce en matériau composite, selon un mode de réalisation de l'invention ;
- Figure 3 : une vue schématique de la pièce en matériau composite de la figure 2 après polymérisation.

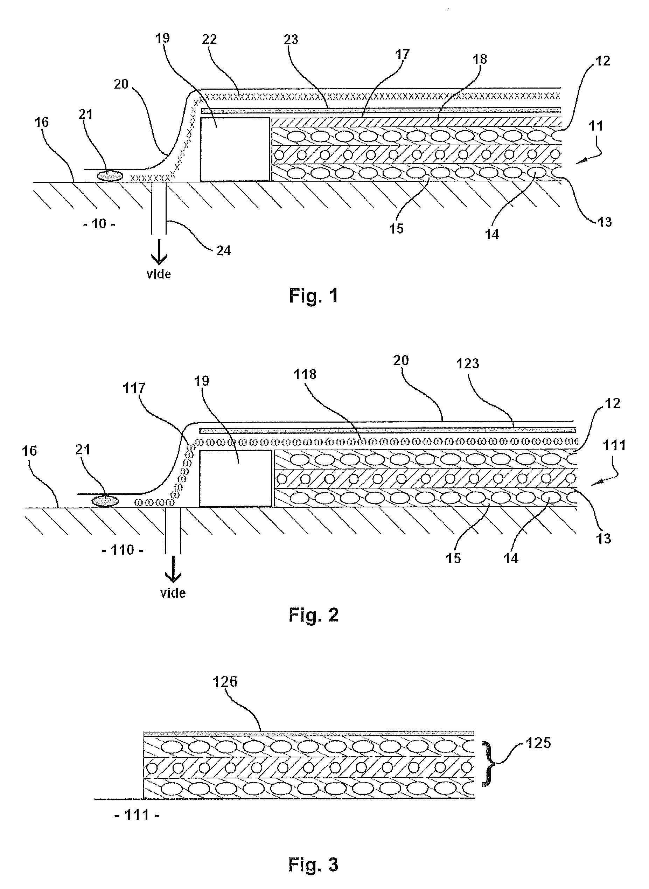

La figure 1 représente une vue schématique en coupe d'un dispositif 10 de fabrication d'une pièce 11 en matériau composite, selon l'état de la technique.

La pièce 11 est représentée sur la figure 1 avant polymérisation. Dans une première étape connue d'un procédé de fabrication de la pièce 11, on empile sur un moule 16 des plis (12, 13) structuraux imprégnés de résine 15 polymère thermodurcissable. Les plis (12, 13) structuraux empilés sont destinés à former une couche structurale après polymérisation de la résine 15. Les plis (12, 13) comportent typiquement des fibres 14 imprégnées de résine.

L'empilement de plis (12, 13) est ensuite recouvert d'un film 17 formé d'une résine 18 polymère thermoplastique.

Afin de procéder à la polymérisation de la résine 15 thermodurcissable, les éléments suivants sont alors disposés sur et autour de l'empilement de plis :
- un bordurage 19 pour éviter le fluage de la résine 15 dans une direction parallèle aux plis (12, 13) ;
- une vessie 20 étanche, disposée par-dessus l'empilement de plis. L'étanchéité est assurée par un mastic 21 disposé entre la vessie 20 et le moule 16 ;
- un élément 22 de drainage, constitué par un mat ou un tissu drainant. L'élément 22 est disposé entre la vessie 20 et la pièce 11.

L'élément 22 permet le drainage de l'air sur toute la surface de la pièce lors d'une mise sous vide préalable à la polymérisation. Durant l'étape suivante de polymérisation, l'élément 22 permet une bonne mise sous vide, ce qui permet d'homogénéiser l'application d'une éventuelle pression extérieure sur la pièce 11.

Dans une moindre mesure, l'élément 22 permet une meilleure évacuation de solvants résiduels de la résine 15, au début de la montée en température pour la polymérisation.

Il est préférable d'éviter un contact direct entre la pièce 11 et l'élément 22 de drainage, afin que ce dernier n'adhère pas à la résine après polymérisation. Il est ainsi possible de protéger la pièce 11 par un élément 23 de séparation, intercalé entre ladite pièce 11 et l'élément 22 de drainage.

L'élément 23 de séparation est par exemple un film plastique étanche aux liquides mais non aux gaz, pour permettre l'évacuation de l'air. L'élément 23 peut également être une tôle de lissage, destinée à donner un aspect lisse à la pièce 11 après polymérisation. La tôle 23 peut comporter des porosités ou perforations pour permettre l'évacuation des gaz.

Typiquement, le procédé de polymérisation de la pièce 11 commence par une diminution de la pression de l'air entre le moule 16 et la vessie 20, par exemple au moyen d'une pompe à vide reliée à une canalisation 24 du moule. Ainsi, la vessie se plaque sur l'ensemble formé par la pièce 11, le bordurage 19, le drainant 22 et l'éventuel élément 23.

La diminution de la pression gazeuse dans la vessie permet à l'air résiduel de s'échapper de l'empilement de plis (12, 13). Par ailleurs, la vessie 20 comprime ledit empilement en se rétractant, ce qui conduit à une pièce composite dense et dépourvue de porosités.

La présence de l'élément 22 de drainage facilite l'évacuation de l'air résiduel durant la rétractation de la vessie 20. Sans l'élément 22, des étanchéités locales de la vessie pourraient se créer et emprisonner de l'air. Ces phénomènes de rétention locale sont notamment favorisés par certaines formes complexes de pièces composites et/ou de grandes dimensions.

Il est à noter que les films 17 de résine thermoplastique sont en général étanches aux gaz avant d'atteindre une certaine température. Ils peuvent donc également gêner le drainage de l'air.

Selon un procédé connu de fabrication de pièces composites, le dispositif 10 sous vide est ensuite placé dans un autoclave, pour être porté à haute température. Eventuellement, une pression supérieure à la pression atmosphérique est exercée à l'extérieur de la vessie 20, afin de compacter encore plus la pièce 11.

La température de l'autoclave est choisie de manière à permettre la polymérisation de la résine 15 thermodurcissable. De préférence, cette température permet également au film 17 thermoplastique de ramollir ou de fondre, de manière à adhérer aux plis (12, 13).

Après polymérisation de la résine 15 et refroidissement, on obtient une pièce 11 monobloc et rigide.

La figure 2 représente une vue schématique en coupe d'un dispositif 110 de fabrication d'une pièce 111 en matériau composite, selon un mode de réalisation de l'invention.

La pièce 111 est représentée sur la figure 2 avant polymérisation. Une première étape de fabrication de la pièce 111 peut être similaire à celle de la pièce 11 précédemment décrite. Cette étape consiste à empiler sur un moule 16 des plis (12, 13) structuraux, imprégnés de résine 15 polymère thermodurcissable et destinés à former une couche structurale après polymérisation de la résine.

Les fibres 14 des plis structuraux sont par exemple des fibres de carbone ou de verre. La nature et/ou l'orientation spatiale des fibres 14 peuvent varier selon le pli (12, 13), de manière connue.

En revanche, la matrice 15 thermodurcissable est préférentiellement identique pour l'ensemble des plis (12, 13), afin d'assurer une bonne cohésion à la pièce 111.

La matrice 15 thermodurcissable est préférentiellement formée d'une résine polyépoxyde, communément appelée résine époxy. Dans le cadre de l'invention, on peut également utiliser une résine bismaléimide ou une résine phénolique, ou tout autre type de résine thermodurcissable utilisé de manière connue pour la fabrication de pièces composites dans le domaine de l'aéronautique.

Une deuxième étape de fabrication de la pièce 111 consiste à draper sur l'empilement de plis (12, 13) un matériau 117, constitué d'un assemblage d'une ou plusieurs fibres 118 de résine thermoplastique 18.

Le matériau 117 se présente notamment sous la forme d'un tricot, mat ou tissu, déformable dans au moins deux directions. En effet, bien que le moule 16 et la pièce 111 représentés à la figure 2 aient une forme plane, il est fréquent que la forme de ces éléments soit complexe, notamment à double courbure. La déformabilité du matériau 117 facilite son drapage sur une telle forme, par rapport au film 17 thermoplastique de la figure 1.

Une jonction (non représentée) entre deux lés de matériau 117 peut se faire par thermosoudage local de la résine thermoplastique, ou encore par couture au moyen d'un fil formé de la même résine. Il est également possible de draper deux lés 117 en chevauchement, le soudage s'effectuant durant l'étape de polymérisation de la résine thermodurcissable.

Par rapport au film 17 thermoplastique de la figure 1, le matériau 117 présente également l'avantage de ne pas être étanche aux gaz, en raison des espaces entre les fibres 118.

Afin de procéder à la polymérisation de la résine 15 thermodurcissable, on dispose un bordurage 19 autour de la pièce 11 et une vessie 20 au-dessus de l'ensemble ainsi formé. L'étanchéité entre la vessie et le moule 16 est assurée par un mastic 21.

De manière connue, la vessie 20 peut être remplacée par un contre-moule.

Contrairement au cas représenté à la figure 1, il n'est pas ajouté d'élément de drainage entre la pièce 111 et la vessie 20.

Une tôle 123 de lissage peut éventuellement être disposée entre la vessie 20 et le matériau 117.

L'étape suivante du procédé de fabrication de la pièce 111 est la mise sous vide de la vessie 20, comme décrite ci-dessus pour la pièce 11. Dans le cas de la pièce 111, c'est le matériau 117 qui assure la fonction de drainage de l'air s'échappant des plis (12, 13), ce qui permet de s'affranchir d'un élément supplémentaire de drainage.

Le dispositif 110 est ensuite placé en autoclave et est soumis à une montée en température, et éventuellement en pression, comme décrit ci-dessus pour le dispositif 10 et la pièce 11.

Tant que la température de l'autoclave est suffisamment inférieure à la température de fusion de la résine 18 thermoplastique, les fibres 118 gardent leur structure et le matériau 117 conserve ses propriétés drainantes. Les solvants résiduels, qui s'évaporent de la résine 15 au début de la montée en température, sont donc convenablement drainés par le matériau 117.

L'autoclave atteint ensuite une température maximale qui permettra d'atteindre une complète polymérisation de la résine 15. De préférence, cette température maximale est proche de la température de fusion ou ramollissement de la résine 18 thermoplastique. Par « proche », on entend que l'écart entre ces températures est inférieur ou égal à 30 °C, en plus ou en moins. De manière plus préférée, la température de fusion de la résine 18 thermoplastique est inférieure à la température de polymérisation de la résine 15 thermodurcissable, avec un écart de 5 à 10 °C entre lesdites températures.

Ainsi, les fibres 118 ramollissent ou fondent durant la polymérisation de la résine 15, pour former un film continu de résine 18 thermoplastique.

La résine 18 thermoplastique formant les fibres 118 est préférentiellement choisie avec une température de fusion relativement basse, ce qui permet de l'utiliser avec des résines thermodurcissables de type époxy. Une résine préférée est par exemple le PVDF (polyfluorure de vinylidène), ou encore un autre fluoropolymère thermoplastique. Cependant, en fonction du procédé choisi pour la fabrication de la pièce 111, d'autres types de résines, aux températures de fusion plus élevées, peuvent être utilisés.

Après refroidissement, on obtient une pièce 111 finie, monobloc et rigide, telle que représentée à la figure 3.

La pièce 111 finie comporte une couche structurale 125 issue de l'assemblage des plis (12, 13), ainsi qu'une couche 126 de surface sous forme d'un film continu de résine 18 thermoplastique.

Une épaisseur de la couche 126 de surface varie préférentiellement entre 1 et 500 µm, préférentiellement entre 10 et 150 µm. Cette épaisseur est fonction du grammage du matériau 117.

L'étape de chauffage peut conduire à une interpénétration partielle entre la couche structurale 125 et la couche de surface 126, en cas de fusion totale ou partielle de la résine 18. Cette interpénétration assure une bonne adhérence entre les couches 125 et 126, indépendamment de la compatibilité physico-chimique entre les résines 15 et 18.

Le procédé décrit ci-dessus à l'appui de la figure 2 permet de simplifier le dispositif 110 de polymérisation par rapport au cas de la figure 1, en supprimant l'élément 22 de drainage. Toutefois, une pièce 111 selon l'invention peut être polymérisée à l'aide d'un dispositif 10 tel que représenté à la figure 1, le matériau 117 prenant alors la place de la couche 17 de résine thermoplastique.

La pièce 111 représentée aux figures 2 et 3 est obtenue en drapant les plis (12, 13) sur le moule 16, puis en les recouvrant du matériau 117. Selon une variante, il est possible de draper le matériau 117 sur le moule 16 puis de le recouvrir de plis (12, 13). Selon une autre variante de fabrication de la pièce 111, le matériau 117 peut être drapé sur une couche structurale 125 partiellement polymérisée, ce qui donne à ladite couche une rigidité suffisante à température ambiante pour être manipulée. L'ensemble matériau 117 / couche 125 est ensuite mis en autoclave pour achever la polymérisation de la résine 15, suivant le dispositif décrit à la figure 2.

Après refroidissement, la pièce 111 peut être manipulée et/ou stockée. Elle peut également être modifiée ultérieurement, par exemple subir une métallisation de la couche 126 de surface, comme décrit dans la demande de brevet français n°11 59078 précédemment citée.

La pièce 111 peut également être assemblée à d'autres pièces composites par soudage au moyen de la couche 126 de surface, comme décrit dans le document WO2007/109855 précédemment cité. Des éléments d'installation systèmes peuvent également être assemblés par soudage à la couche 126.

## Revendications

1. Procédé de fabrication d'une pièce (111) en matériau composite, ledit procédé comprenant les étapes suivantes :
- une étape de dépôt d'un ou de plusieurs plis (12, 13) structuraux imprégnés d'une résine (15) thermodurcissable pour former une couche structurale (125),
- une étape de dépôt d'une couche de surface en empilement avec les plis structuraux, ladite couche de surface étant formée d'un assemblage (117) d'une ou plusieurs fibres de résine (18) thermoplastique, ledit assemblage étant déformable selon au moins deux directions,
ladite résine thermoplastique ayant une température de fusion proche d'une température de polymérisation de ladite résine thermodurcissable,
le dépôt de la couche de surface pouvant intervenir avant ou après le dépôt des plis structuraux,
- puis, une étape de polymérisation de la couche structurale à la température de polymérisation, la couche de surface prenant alors la forme d'un film (126) continu revêtant la couche structurale.

2. Procédé selon la revendication 1, tel que l'assemblage (117) d'une ou plusieurs fibres thermoplastiques est un matériau choisi parmi un tricot, un mat ou un tissu.

3. Procédé selon la revendication 2, tel que l'assemblage (117) est un tissu de type sergé ou satin.

4. Procédé selon l'une des revendications 1 à 3, tel qu'une résine (15) thermodurcissable de la couche structurale est choisie parmi une résine polyépoxyde, une résine bismaléimide et une résine phénolique.

5. Procédé selon l'une des revendications précédentes, telle que la résine (18) thermoplastique de la couche de surface a une température de fusion comprise entre 100 °C et 250 °C.

6. Procédé selon l'une des revendications précédentes, comprenant ensuite une étape de métallisation de la couche (126) de surface sous forme de film continu.

7. Procédé selon l'une des revendications précédentes, comprenant une étape de mise sous vide de l'empilement de plis préalablement à l'étape de polymérisation de la couche structurale, la couche de surface formée d'un assemblage (117) de fibres de résine thermoplastique assurant une fonction de drainage de l'air lors de ladite étape de mise sous vide.

## Patentansprüche

1. Verfahren zur Herstellung eines Bauteils (111) aus Verbundmaterial, wobei das Verfahren die folgenden Schritte enthält:
- einen Schritt des Aufbringens einer oder mehrerer mit einem Duroplast (15) imprägnierter Strukturlagen (12, 13), um eine Strukturschicht (125) zu bilden,
- einen Schritt des Aufbringens einer Oberflächenschicht in einem Stapel mit den Strukturlagen, wobei die Oberflächenschicht von einer Zusammenfügung (117) einer oder mehrerer Thermoplastfasern (18) gebildet wird, wobei die Zusammenfügung in mindestens zwei Richtungen verformbar ist,
wobei der Thermoplast eine Schmelztemperatur nahe einer Polymerisierungstemperatur des Duroplasts hat,
wobei das Aufbringen der Oberflächenschicht vor oder nach dem Aufbringen der Strukturlagen erfolgen kann,
- dann einen Schritt der Polymerisierung der Strukturschicht bei der Polymerisierungstemperatur, wobei die Oberflächenschicht dann die Form eines durchgehenden Films (126) annimmt, der die Strukturschicht bedeckt.

2. Verfahren nach Anspruch 1, derart, dass die Zusammenfügung (117) einer oder mehrerer Thermoplastfasern ein Material ist, das unter einem Gewirk, einem Spanvlies oder einem Gewebe ausgewählt wird.

3. Verfahren nach Anspruch 2, derart, dass die Zusammenfügung (117) ein Gewebe von der Art Serge oder Satin ist.

4. Verfahren nach einem der Ansprüche 1 bis 3, derart, dass ein Duroplast (15) der Strukturschicht unter einem Polyepoxidharz, einem Bismaleimid-Harz und einem Phenolharz ausgewählt wird.

5. Verfahren nach einem der vorhergehenden Ansprüche, derart, dass der Thermoplast (18) der Oberflächenschicht eine Schmelztemperatur zwischen 100°C und 250°C hat.

6. Verfahren nach einem der vorhergehenden Ansprüche, das anschließend einen Schritt der Metallbeschichtung der Oberflächenschicht (126) in Form eines durchgehenden Films enthält.

7. Verfahren nach einem der vorhergehenden Ansprüche, das einen Schritt der Vakuumierung des Stapels von Lagen vor dem Schritt der Polymerisierung der Strukturschicht enthält, wobei die von einer Zusammenfügung (117) von Thermoplastfasern gebildete Oberflächenschicht eine Funktion der Entlüftung beim Schritt der Vakuumierung gewährleistet.

## Claims

1. Process for manufacturing a composite part (111), said process comprising the following steps:
- a step of depositing one or more structural plies (12, 13) impregnated with a thermosetting resin (15) in order to form a structural layer (125),
- a step of depositing a surface layer as a stack with the structural plies, said surface layer being formed from an assembly (117) of one or more fibres of thermoplastic resin (18), said assembly being deformable in at least two directions,
said thermoplastic resin having a melting point close to a polymerization temperature of said thermosetting resin,
the deposition of the surface layer possibly taking place before or after the deposition of the structural plies,
- next, a step of polymerizing the structural layer at the polymerization temperature, the surface layer then taking the shape of a continuous film (126) coating the structural layer.

2. Process according to Claim 1, such that the assembly (117) of one or more thermoplastic fibres is a material selected from a knit fabric, a mat or a woven fabric.

3. Process according to Claim 2, such that the assembly (117) is a woven fabric of twill or satin type.

4. Process according to one of Claims 1 to 3, such that a thermosetting resin (15) of the structural layer is selected from a polyepoxide resin, a bismaleimide resin and a phenolic resin.

5. Process according to one of the preceding claims, such that the thermoplastic resin (18) of the surface layer has a melting point between 100°C and 250°C.

6. Process according to one of the preceding claims, then comprising a step of metallizing the surface layer (126) in the form of a continuous film.

7. Process according to one of the preceding claims, comprising a step of placing the stack of plies under vacuum prior to the step of polymerizing the structural layer, the surface layer formed from an assembly (117) of fibres of thermoplastic resin performing an air drainage role during said step of placing under vacuum.
